# EUROPEAN PATENT SPECIFICATION

(11) **EP 4 274 337 B1**
(45) Date of publication and mention of the grant of the patent: **04.11.2026**
(21) Application number: 21914228.8
(22) Date of filing: 27.12.2021
(51) Int. Cl.: H04L 5/00

(54) **UCI MULTIPLEXING METHOD AND APPARATUS, DEVICE, AND READABLE STORAGE MEDIUM**
UCI-MULTIPLEXVERFAHREN UND -VORRICHTUNG, VORRICHTUNG UND LESBARES SPEICHERMEDIUM
PROCÉDÉ ET APPAREIL DE MULTIPLEXAGE D'UCI, DISPOSITIF ET SUPPORT D'ENREGISTREMENT LISIBLE

(30) Priority: 31.12.2020 CN 202011623201
(43) Date of publication of application: 08.11.2023
(73) Proprietor: Vivo Mobile Communication Co., Ltd., Dongguan, Guangdong 523863 (CN)
(72) Inventor: WU, Kai, Dongguan, Guangdong 523863 (CN); LI, Na, Dongguan, Guangdong 523863 (CN); PAN, Xueming, Dongguan, Guangdong 523863 (CN)
(74) Representative: Lavoix
(86) International application number: PCT/CN2021/141513
(87) International publication number: WO 2022/143491

(56) References cited:
- EP-A1- 3 751 923
- EP-A1- 3 783 826
- CN-A- 110 474 747
- CN-A- 110 474 747
- CN-A- 110 958 085
- CN-A- 111 181 694
- US-A1- 2019 141 647
- US-A1- 2019 327 759

## Description

### TECHNICAL FIELD

This application belongs to the field of communication technologies, and in particular, relates to an uplink control information (Uplink Control Information, UCI) multiplexing method and apparatus, a device, and a readable storage medium.

### BACKGROUND

When there is a resource conflict between a physical uplink control channel (Physical Uplink Control Channel, PUCCH) configured to transmit UCI and a physical uplink shared channel (Physical Uplink Shared Channel, PUSCH) used by a terminal for transmitting data, in a case that the PUSCH needs to be transmitted preferentially, a transmission delay of the PUCCH is increased. EP3751923A1 discloses a method of sending UCI, including: in the case that an overlapping of PUCCH and PUSCH in a time domain occurs, selecting a PUSCH to carry and send UCI, based on at least one of an uplink data scheduling type and a numerology of uplink carrier. CN110474747A discloses a method for signal transmission, including: determining the sending mode of multiple uplink channels by a user equipment (UE) in a case where overlapped symbols of the uplink channels exist in time domain; and sending uplink signals carried by the uplink channels according to the determined sending mode. US20190327759A1 discloses a method for a terminal transmitting an uplink control channel in a wireless communication system, including: determining the overlapping or not between a first physical uplink control channel (PUCCH) and a second PUCCH; and determining a transmission method for the first PUCCH and the second PUCCH on the basis of the determining.

### SUMMARY

Embodiments of this application provide a UCI multiplexing method and apparatus, and a readable storage medium as defined in the appended set of claims to resolve a problem of how to reduce a PUCCH transmission delay.

In the embodiments of this application, when a PUCCH and a PUSCH at least partially overlap in time domain, UCI carried by the PUCCH may be multiplexed to the PUSCH transmitted across a plurality of time units, which effectively reduces a transmission delay of the PUCCH.

### BRIEF DESCRIPTION OF THE DRAWINGS

FIG. 1 is a schematic diagram of a wireless communication system to which an embodiment of this application is applicable;
FIG. 2 is a flowchart of a UCI multiplexing method according to an embodiment of this application;
FIG. 3 is a schematic diagram of a PUSCH transmitted across a plurality of slots;
FIG. 4 is a schematic diagram of a PUSCH transmitted across a plurality of slots that multiplexes a plurality of pieces of UCI according to an embodiment of this application;
FIG. 5 is a schematic diagram of a PUSCH transmitted across 4 slots that multiplexes a plurality of pieces of UCI according to an embodiment of this application;
FIG. 6 is a schematic diagram of a UCI multiplexing apparatus according to an embodiment of this application; and
FIG. 7 is a schematic diagram of a terminal according to an embodiment of this application not covered by the claims.

### DETAILED DESCRIPTION

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are used to distinguish between similar objects but are not used to describe a specified order or sequence. It should be understood that the data so used may be interchanged in an appropriate condition, so that embodiments of this application can be implemented in an order other than those illustrated or described herein. In addition, objects distinguished by "first" and "second" are usually of one type, and a quantity of the objects is not limited. For example, a first object may be one or more than one. In addition, "and" in the specification and claims represents at least one of connected objects. The character "/" generally indicates an "or" relationship between the associated objects.

It is worth noting that technologies described in the embodiments of this application are not limited to an LTE-Advanced (LTE-Advanced, LTE-A) system of long term evolution (Long Term Evolution, LTE)/LTE, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FMA), and other systems. The terms "system" and "network" in the embodiments of this application are often used interchangeably, and the described technologies may be used for not only the foregoing systems and radio technologies, but also other systems and radio technologies. However, the following description describes a new radio (New Radio, NR) system for a purpose of example, and an NR term is used in many parts of the following description. These technologies are also applicable to an application other than an NR system application, such as a 6th generation (6th Generation, 6G) communication system.

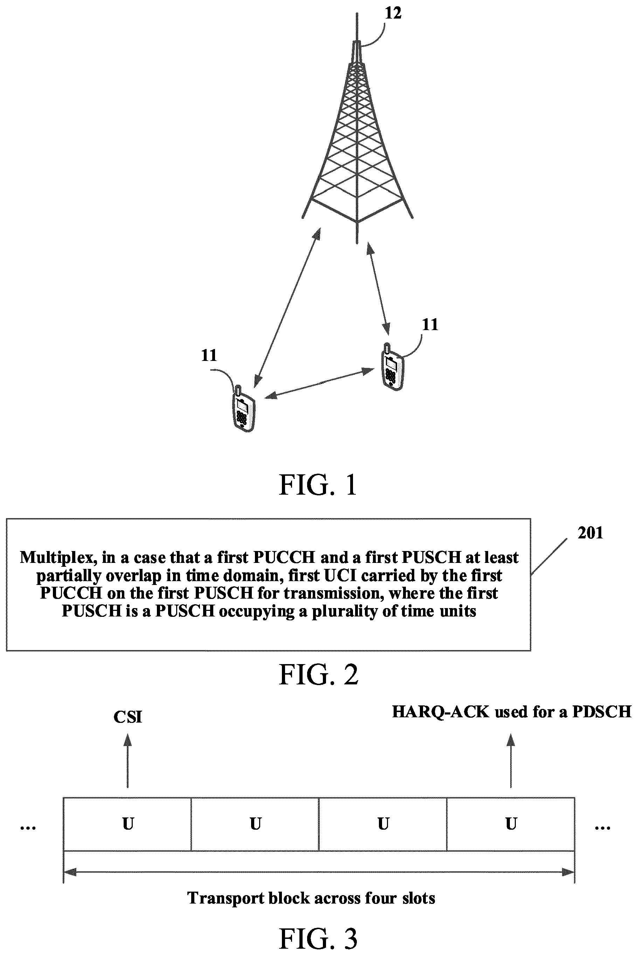

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), pedestrian user equipment (Pedestrian User Equipment, PUE), and the like. The wearable device includes: a bracelet, a headphone, glasses, and the like. It should be noted, the embodiments of this application do not limit a specific type of the terminal 11. The network side device 12 may be a base station or a core network side device. The base station may be referred to as a Node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a WiFi node, a transmitting receiving point (Transmitting Receiving Point, TRP), or another appropriate term in the field, as long as the same technical effect is achieved. The base station is not limited to a specific technical term. It should be noted that, only a base station in the NR system is used as an example in the embodiments of this application, but a specific type of the base station is not limited.

A UCI multiplexing method and apparatus, a device, and a readable storage medium provided in the embodiments of this application are described in detail below through some embodiments and application scenarios thereof with reference to the accompanying drawings.

Referring to FIG. 2, an embodiment of this application provides a UCI multiplexing method, performed by a terminal, and the method includes: Step 201.

Step 201: Multiplex, in a case that a first PUCCH and a first PUSCH at least partially overlap in time domain, first UCI carried by the first PUCCH on the first PUSCH for transmission. The first PUSCH is a PUSCH occupying a plurality of time units. where the time units may be slots, sub-slots, symbols, or subframes.

Types of the first UCI include: hybrid automatic repeat request acknowledgement (Hybrid automatic repeat request acknowledgement, HARQ-ACK), channel state information (Channel State Information, CSI) reporting, scheduling request (SR (scheduling request, SR), configured grant uplink control information (Configured Grant Uplink Control Information, CG-UCI), where processing of multiplexing CG-UCI on the configured grant physical uplink shared channel (Configured Grant Physical Uplink Shared Channel, CG-PUSCH) is similar to that of the HARQ-ACK.

The CSI may be transmitted on the PUSCH in a manner of being triggered by downlink control information (Downlink Control Information, DCI)/media access control control element (media access control control element, MAC CE).

It can be understood that in a case that the first UCI on the first PUCCH is multiplexed to the first PUSCH for transmission, the first UCI and a part of data transmitted by the first PUSCH are coded separately and mapped for transmission. When the first UCI is multiplexed to the first PUSCH for transmission, a network can configure a parameter β-offset (beta-offset) value for the first PUSCH to determine a quantity of symbols or resources elements (Resource element, RE) occupied by the first UCI in the first PUCCH. A larger beta-offset value indicates that more resources are occupied by the multiplexed first UCI on the first PUSCH.

In addition, the network can configure a parameter α (alpha) value to determine a quantity of symbols or REs occupied by the first UCI multiplexed on the first PUSCH, that is, the resources occupied by the first UCI after being multiplexed to the first PUSCH cannot exceed an upper limit of the quantity of symbols or REs determined by the parameter α value.

For example, a plurality of pieces of first UCI carried by the first PUCCH are multiplexed on the first PUSCH for transmission, or the first UCI carried by the first PUCCH is multiplexed on the first PUSCH for a plurality of times for transmission, which can further reduce a PUCCH transmission delay.

In a new radio (NR) network, cross-slot PUSCH transmission can be supported, that is, a PUSCH can be transmitted over a plurality of slots. An implementation is to determine a transport block size (Transport Block size, TB size) of the PUSCH according to a total quantity of symbols or resource elements (Resource element, RE) of a plurality of slots.

In this embodiment of this application, the first PUSCH may be time-continuous PUSCHs, or the first PUSCH may alternatively be time-discontinuous PUSCHs.

In this embodiment of this application, the method further include:

determining a quantity of resources occupied by the first UCI in the first PUSCH according to a quantity of at least some resources of the first PUSCH.

The quantity of at least some resources of the first PUSCH is a quantity of resources that may be used for transmitting and multiplexing UCI on the first PUSCH.

It can be understood that a quantity of resources herein may be a quantity of symbols, a quantity of REs, a quantity of sub-slots (sub-slot), a quantity of slots (slot), a quantity of radio frames, and the like.

Further, in this embodiment of this application, the determining a quantity of resources occupied by the first UCI in the first PUSCH according to a quantity of at least some resources of the first PUSCH may include:
determining the quantity of resources occupied by the first UCI in the first PUSCH according to a configuration parameter and the quantity of at least some resources of the first PUSCH, where
the configuration parameter may include one or more of the following:
   (1) a first parameter, used for determining the quantity of resources occupied by the first UCI; and
   (2) a second parameter, used for determining a quantity of resources that may be used for multiplexing and transmitting the first UCI in the first PUSCH, where the quantity of resources may be understood as a maximum quantity of resources that may cause the first UCI to be multiplexed in the first PUSCH.

For example, the first parameter is the β-offset (beta-offset) value, and the second parameter is a reduced or an enlarged α value, such as an α value configured according to a preset ratio. In this embodiment of this application, the preset ratio is not specifically limited.

For example, the quantity of resources occupied by the first UCI determined by the first parameter is A, and the quantity of resources used for multiplexing and transmitting the first UCI in the first PUSCH determined by the second parameter is B. In a case that A is greater than B, the quantity of resources occupied by the first UCI in the first PUSCH can be determined as B. In a case that A is less than B, the quantity of resources occupied by the first UCI in the first PUSCH can be determined as A.

In this embodiment of this application, the quantity of at least some resources of the first PUSCH is determined according to one or more of the following:
(1) a quantity of symbols of the first PUSCH;
(2) a quantity of resources other than a demodulation reference signal (Demodulation Reference Signal, DMRS) on the first PUSCH;
   For example, in a case that the quantity of symbols of the first PUSCH is M and a quantity of symbols occupied by the DMRS is N, the quantity of at least some resources of the first PUSCH is M-N.
(3) a quantity of resources configured by the network;
   Optionally, the quantity of resources configured by the network is less than or equal to the quantity of symbols of the first PUSCH, or the quantity of resources configured by the network is less than or equal to the quantity of resources other than the DMRS on the first PUSCH.
(4) a quantity of predefined resources;
   For example, a nominal or an actual quantity of resources occupied by PUSCH transmission in one slot, for example, the quantity of predefined resources is 14 symbols, but certainly the quantity of predefined resources is not limited thereto.
(5) a quantity of resources occupied by the UCI that has been multiplexed and transmitted on the first PUSCH;
   That is, before the first UCI is multiplexed and transmitted on the first PUSCH, other pieces of UCI are multiplexed to the first PUSCH. In this case, the quantity of at least some resources of the first PUSCH is determined according to a quantity of resources occupied by the other pieces of UCI.
(6) The type of the first UCI.
   For example, the type may be hybrid automatic repeat request acknowledgement (Hybrid automatic repeat request acknowledgement, HARQ-ACK), scheduling request (Scheduling Request, SR), and channel state information (Channel State Information, CSI) part 1 (part 1) and CSI part 2.

For example, an example in which the first UCI carried by the first PUCCH is CSI (such as aperiodic CSI (Aperiodic CSI, A-CSI)) is used, that is, the CSI is transmitted on the multi-slot first PUSCH, then the CSI is:
(1) transmitted on a first slot on the first PUSCH; Optionally, the slot is a complete slot;
(2) transmitted on the first slot including a DMRS on the first PUSCH; and
(3) on a first slot on the first PUSCH (other than the DMRS) whose symbol length is greater than or equal to L, where L is a preset value.

In this embodiment of this application, to determine the quantity of resources occupied by multiplexing the first UCI carried by the first PUCCH on the first PUSCH, the network configures the first parameter (β) and the second parameter (α), and determines the quantity of resources occupied by the first UCI according to the quantity of at least some resources of the first PUSCH.

The quantity of at least some resources of the first PUSCH may be configured for the first PUSCH transmitted in a plurality of slots, and the first parameter (β) and the second parameter (α) may be different from a parameter configured for the PUSCH transmitted in one slot.

Alternatively, the quantity of resources occupied by multiplexing the first UCI is determined according to a quantity of reference resources. The quantity of reference resources may be less than or equal to a quantity of symbols of the multi-slot first PUSCH (or the quantity of symbols other than the DMRS), or a quantity of resources corresponding to one slot, for example, 14 symbols, is always predefined, to determine the quantity of resources occupied by multiplexing the first UCI.

HARQ-ACK multiplexing is used as an example, and the required quantity of at least some resources of the first PUSCH is: ${Q}_{UCI}^{′} = min \left\{\left⌈\frac{\left({O}_{UCI}+{L}_{UCI}\right) ⋅ {β}_{offset}^{PUSCH} ⋅ {\sum }_{l = 0}^{{N}_{symb , x}^{PUSCH} - 1} {M}_{sc}^{UCI} \left(l\right)}{{\sum }_{r = 0}^{{C}_{UL - SCH} - 1} {K}_{r}}\right⌉, \left⌈α⋅{\sum }_{l = 0}^{{N}_{symb , x}^{PUSCH} - 1} {M}_{sc}^{UCI} \left(l\right)\right⌉\right\}$${N}_{symb , x}^{PUSCH}$ is the quantity of reference symbols used for calculating the quantity of at least some resources ${Q}_{UCI}^{′}$ of the first PUSCH, and may be:
the quantity of symbols of the first PUSCH other than the DMRS; or
a quantity of preset symbols, for example, a quantity of symbols corresponding to M slots, where M is a positive integer greater than or equal to 1; or
a quantity of some continuous symbols of the first PUSCH overlapping the first PUCCH.

*C*_{UL-SCH} is a quantity of code blocks (code blocks) of an uplink shared channel (Uplink Shared Channel, UL-SCH) transmitted by the PUSCH.

*Kᵣ* is a size of the rth code block of UL-SCH transmitted by the PUSCH.${M}_{sc}^{UCI} \left(l\right)$ is a quantity of resource elements that may be used for transmitting UCI in an orthogonal frequency division multiplexing (OFDM) symbol l.

O_{UCI} is a quantity of bits of the UCI.

*L_{UCI}* is a quantity of bits of cyclic redundancy check (Cyclic redundancy check, CRC) of the UCI.

In this embodiment of this application, before step 201, the method further includes:
determining one or more of the following according to a quantity of pieces of the UCI that has been multiplexed and transmitted and/or a quantity of times that the UCI has been multiplexed and transmitted on the first PUSCH:
(1) whether to multiplex and transmit the first UCI on the first PUSCH;
(2) the quantity of resources occupied by the first UCI on the first PUCCH;
(3) a multiplexing manner of the first UCI on the first PUCCH (for example, rate matching (rate matching) or puncture (puncture)).

In this embodiment of this application, after the first PUSCH performs UCI multiplexing, UCI multiplexing may continue to be performed in subsequent transmission (such as the second and more UCI multiplexing), to further reduce the transmission delay of the PUCCH.

In this embodiment of this application, before step 201, the method further includes:
determining a quantity of times of the repetition transmission of the first UCI on the first PUSCH depending on whether the first PUCCH is a repetition transmission.

In this embodiment of this application, in a case that the quantity of times that the UCI has been multiplexed and transmitted on the first PUSCH is x, or in a case that the quantity of pieces of UCI that has been multiplexed and transmitted on the first PUSCH is y, after the first PUSCH is transmitted, in a case that a second PUCCH and the first PUSCH at least partially overlap in the time domain, the method further includes one or more of the following:
(1) skipping transmitting the second PUCCH, that is, the UCI carried by the second PUCCH is no longer multiplexed on the first PUSCH;
(2) determining whether to multiplex the second UCI carried by the second PUCCH to the first PUSCH for transmission according to a priority of the second PUCCH;
(3) determining whether the second UCI is multiplexed and transmitted on the first PUSCH according to a type of the second UCI carried by the second PUCCH;
   For example, specific types of UCI are multiplexed, such as HARQ-ACK, SR, and CSI part 1, and other types of UCI is not multiplexed, such as CSI part 2.
(4) determining whether the second UCI carried by the second PUCCH is multiplexed and transmitted to the first PUSCH according to the resources occupied by the UCI that has been multiplexed and transmitted on the first PUSCH;
   For example, in a case that the resource occupied by the multiplexed first UCI is greater than a threshold, the second UCI is not multiplexed and transmitted on the first PUSCH.

x is less than or equal to a maximum quantity of times X that the UCI is capable of being multiplexed on the first PUSCH, and y is less than or equal to a maximum quantity Y of pieces of UCI that is capable of being multiplexed on the first PUSCH.

In this embodiment of this application, in a case that it is determined that the second UCI is multiplexed and transmitted on the first PUSCH, the method further includes:
determining resources occupied by the second UCI multiplexed and transmitted on the first PUSCH, where
the resources occupied by the second UCI do not include: resources occupied by the multiplexed UCI on the first PUSCH.

In this embodiment of this application, the determining to multiplex the second UCI to the first PUSCH for transmission includes one of the following:
(1) determining a quantity of resources occupied by multiplexing the second UCI to the first PUSCH for transmission according to one or more of the first parameter, the second parameter, the quantity of times X that the first UCI is multiplexed on the first PUSCH, or the quantity Y of pieces of the first UCI that is multiplexed on the first PUSCH, where
   the first parameter is used for determining the quantity of resources occupied by the first UCI; and the second parameter is used for determining a quantity of resources that may be used for multiplexing and transmitting the first UCI on the first PUSCH.
   It can be understood that the same first parameter (β) and second parameter (α) may be used for multiplexing different pieces of UCI on the first PUCCH.
(2) determining the quantity of resources occupied by the second UCI multiplexed and transmitted on the first PUSCH according to a third parameter and a fourth parameter, where
   the third parameter is used for determining the quantity of resources occupied by the second UCI, that is, the third parameter is β configured for multiplexing the second PUCCH, or the third parameter may be determined based on the first parameter, for example, based on amplification or reduction of first parameter.

The fourth parameter is used for determining the quantity of resources that may be used for the second UCI multiplexed and transmitted on the first PUSCH, that is, the fourth parameter is an α value configured for multiplexing the second PUCCH, or the fourth parameter may be determined based on the second parameter, for example, based on amplification or reduction of the second parameter.

In this embodiment of this application, in a case that it is determined that the second UCI is multiplexed and transmitted on the first PUSCH, the method further includes:
determining a multiplexing manner of multiplexing and transmitting the second UCI on the first PUSCH, where
the multiplexing manner includes one or more of the following:
   (1) performing rate matching or puncturing (puncture) on the second UCI on the first PUSCH; and
   (2) the resources occupied by the second UCI on the first PUSCH do not include the resources occupied by the UCI that has been multiplexed and transmitted on the first PUSCH, that is, when the second PUCCH is multiplexed to the first PUSCH, the resources occupied by the multiplexed UCI are avoided.

Referring to FIG. 3, because the PUSCH transmitted on a plurality of slots occupies a relatively large quantity of time-domain resources, duration of continuous transmission is relatively long. The transmission may be continuous or non-continuous, and there may be a case in which a plurality of pieces of UCI is multiplexed to one PUSCH or the UCI is multiplexed to one PUSCH for a plurality of times. In a case that a plurality of pieces of UCI is multiplexed or the UCI is multiplexed for a plurality of times, a new multiplexing behavior needs to be defined.

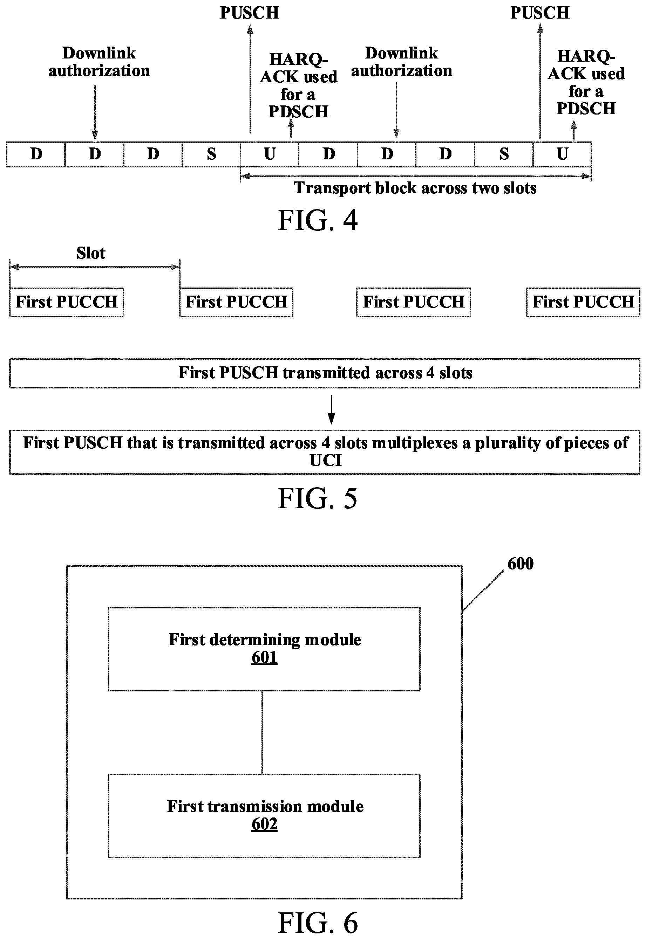

Referring to FIG. 4, a PUSCH is transmitted on two discontinuous uplink slots, and one piece of UCI is multiplexed on a first slot, the UCI may be HARQ-ACK feedback corresponding to a physical downlink shared channel (PDSCH) (or may be another type of UCI, such as SR, CSI, and the like, or may be transmitted together with these pieces of UCI).

The PUSCH on a second slot and second UCI overlap in time domain. The UCI in the figure is also HARQ-ACK corresponding to the PDSCH transmitted between the two slots, or the UCI is transmitted corresponding to the CSI.

Existing PUSCH transmission on less than or equal to one slot supports multiplexing UCI once. After introducing the multi-slot first PUSCH, whether and how to support UCI multiplexing for a plurality of times need to be further determined.

Based on the descriptions of this embodiment of this application, it can be determined that in a case that the UCI has been multiplexed x=1 time, in a case that the second PUCCH and the first PUSCH overlap in the time domain, the multi-slot first PUSCH does not performed UCI multiplexing for the second time.

Alternatively, for example, HARQ-ACK corresponding to a high priority is multiplexed and transmitted according to a priority of the UCI carried by the second PUCCH, otherwise, HARQ-ACK is not multiplexed or transmitted.

Alternatively, multiplexing is performed according to a type of the second UCI carried by the second PUCCH, and only specific types of UCI is multiplexed, for example, HARQ-ACK, SR, and CSI part 1; and other types of CSI is not multiplexed, for example, CSI part 2.

Alternatively, whether to multiplex the second UCI is determined according to the resources occupied by the UCI that has been multiplexed and transmitted on the first PUSCH. In a case that the resources occupied by the multiplexed UCI are greater than a threshold, all or some of the pieces of the second UCI carried by the second PUCCH are not multiplexed.

In a case that the quantity of pieces of UCI that has been multiplexed and transmitted exceeds the maximum quantity Y of pieces of UCI that can be multiplexed on the first PUSCH, or the quantity of times that the UCI is multiplexed and transmitted have exceeded the maximum quantity of times X that the UCI can be multiplexed to the first PUSCH, the UCI is no longer multiplexed.

Further, in a case that it is determined that multiplexing is required according to the foregoing rules, resources for multiplexing transmission may be determined in the following manner.

For example, the first parameter (beta-offset) and the second parameter (alpha) are used for determining the resources occupied by multiplexing the second UCI carried by the second PUCCH, that is, the foregoing parameters determine the resources in the first PUSCH that can be used for multiplexing and transmitting the second UCI. Because the first UCI has been multiplexed before, the quantity of resources occupied by the multiplexed first UCI needs to be subtracted in a resource calculation process.

Optionally, not all pieces of UCI previously multiplexed on the first PUSCH completely overlap in the first PUCCH, that is, some pieces of UCI cannot be transmitted because of insufficient available resources, then the UCI in the second PUCCH is not multiplexed to the first PUSCH for transmission.

Alternatively, the quantity of resources that can be occupied by multiplexing the second UCI carried by the second PUCCH to the first PUSCH is determined according to the third parameter or the fourth parameter. These parameters may be associated configurations with an x^{th} UCI multiplexing or the y^{th} UCI multiplexing, that is, the network can configure different parameters for different quantities of times of UCI multiplexing and multiplexing of different quantities of pieces of UCI to determine the quantity of resources occupied by multiplexing and transmitting the UCI.

Alternatively, a calculation method of the third parameter or a calculation method of the fourth parameter is defined, for example, reduction or enlargement respectively relative to the first parameter or the second parameter. When the quantity of resources occupied by second PUCCH multiplexing is determined according to the third parameter and the fourth parameter, it may be based on the quantity of resources of the first PUSCH (other than the DMRS), or based on the quantity of resources of the first PUSCH (other than the DMRS) minus the quantity of occupied resources of the multiplexed UCI, or may be based on a quantity of symbols in a slot in which the overlapped first PUSCH is located, or may be based on a quantity of symbols used for continuous transmission of the overlapped first PUSCH.

Further, after the quantity of resources is determined, the multiplexing manner and a location of resources transmission can be further determined.

For example, the multiplexed second UCI is transmitted on the first PUSCH in a manner of puncturing or rate matching. The resources occupied by the multiplexed second UCI need to avoid the resources occupied by the multiplexed first UCI, that is, the resources occupied by the multiplexed first UCI should be avoided when the second UCI is multiplexed to the first PUSCH. In a case that the symbols overlap, the second UCI is delayed to nonoverlapping symbols.

In this embodiment of this application, the method further includes:
multiplexing and transmitting the second UCI carried by the second PUCCH on continuous transmission resources in the first PUSCH in a case that the first PUSCH is a discontinuously transmitted PUSCH.

In this embodiment of this application, the method further includes:
determining the quantity of resources occupied by the second UCI on the first PUSCH according to a quantity of continuous transmission resources in the first PUSCH.

A quantity of continuous transmission resources in the first PUSCH is a quantity of symbols of the continuous transmission resources in the first PUSCH, or a quantity of symbols of the continuous transmission resources in one slot in the first PUSCH.

In this embodiment of this application, in a case that the first PUSCH is a discontinuously transmitted PUSCH, the method further includes one of the following:
(1) skipping transmitting the first PUSCH; and
(2) skipping transmitting some of the continuous transmission resources in the first PUSCH that overlaps with the second PUCCH in time or partially overlaps with the second PUCCH.

In this embodiment of this application, the method further includes:
determining a quantity of resources of the first PUCCH according to a quantity of times of repetition transmission of the first PUCCH in a case that the first PUCCH is a PUCCH of a repetition transmission.

In this embodiment of this application, the determining a quantity of resources of the first PUCCH according to a quantity of times of repetition transmission of the first PUCCH includes:
determining the quantity of resources of the first PUCCH according to the quantity of times of repetition transmission of the first PUCCH, the first parameter, and/or the second parameter.

For example, in a case that the first PUCCH is a PUCCH of a repetition transmission, the quantity of resources of the first PUCCH is calculated according to the quantity of times of repetition transmission, for example, the first parameter and/or the second parameter are reduced or enlarged according to the quantity of times of repetition transmission. For example, the beta-offset is scaled and multiplied by X times (beta-offset-X-slot=X*beta-offset), and the quantity of resources of the first PUCCH is determined according to the scaled first parameter.

In this embodiment of this application, the method further includes:
performing steps of multiplexing the first UCI carried by the first PUCCH on the first PUSCH for transmission in a case that the first PUCCH is a PUCCH of a repetition transmission and a first condition is met, where
the first condition includes one or more of the following:
   (1) the quantity of resources of the first PUCCH is less than or equal to a quantity of at least some resources of the first PUSCH; and
   (2) resources transmitted by the first PUCCH are within transmission duration of transmission of the first PUSCH. Optionally, the duration may be a time period from a transmission start symbol to an end symbol of the first PUSCH, and the first PUSCH transmission may be non-continuous transmission.

In this embodiment of this application, the method further includes: reporting a terminal capability to a network side device, where
the terminal capability includes one or more of the following:
(1) a maximum quantity of times of supporting multiplexing of UCI on a PUSCH;
(2) a maximum quantity of pieces of UCI that can be multiplexed on the PUSCH; and
(3) whether to support UCI multiplexing in a manner of rate matching.

Referring to FIG 5, in a case that a first PUCCH is a PUCCH of a repetition transmission, UCI can be multiplexed in a case that the following conditions are met:
a) a quantity of slots or symbols P of the repeated first PUCCH transmission is less than or equal to a quantity of slots or symbols Q of the multi-slot first PUSCH;
b) resources of the repeated first PUCCH transmission are within duration of the PUSCH transmission, where the duration may be a time period from a transmission start symbol to an end symbol of the first PUSCH, and the first PUSCH transmission may be non-continuous transmission.

In this embodiment of this application, an operation of multiplexing the first UCI carried by the first PUCCH on the first PUSCH for transmission is executed in a case that the duration of the first PUSCH transmission is greater than a first threshold, or a quantity of resources occupied by the first PUSCH is greater than a second threshold.

The first threshold and/or the second threshold may be predefined or configured by a network or agreed in a protocol.

The foregoing duration refers to a period of time from start of the transmission to end of the transmission, and at least a part of the duration may be discontinuous.

In the prior art, after a terminal starts PUSCH transmission, it is not supported that HARQ-ACK corresponding to a PDSCH scheduled after the start time is multiplexed to the PUSCH. Therefore, excessively long duration causes a feedback delay process of the HARQ-ACK corresponding to the newly scheduled PDSCH. However, in this embodiment of this application, after the terminal starts PUSCH transmission, it is supported that the HARQ-ACK corresponding to a PDSCH scheduled after the start time is multiplexed to the PUSCH, which can reduce a feedback delay of the HARQ-ACK.

In this embodiment of this application, the first UCI is the HARQ-ACK of the PDSCH, and a start moment of a PDCCH for scheduling the PDSCH is after a time T after the first PUSCH starts transmission, or after a time T before the first PUSCH starts transmission, and T is greater than or equal to 0.

In this embodiment of this application, a transmission mode of the first PUSCH is that a transport block is mapped on a plurality of time units for transmission; or a transport block is mapped on a plurality of time units for repeated transmission.

In this embodiment of this application, when the first PUCCH and the first PUSCH transmitted across a plurality of time units at least partially overlap in time domain, the first UCI carried by the first PUCCH may be multiplexed (for example, a plurality of pieces of first UCI may be multiplexed or the first UCI is multiplexed for a plurality of times) on the first PUSCH for transmission, which effectively reduces the transmission delay of the PUCCH.

Referring to FIG. 6, an embodiment of this application provides a UCI multiplexing apparatus, and the apparatus 600 includes:
a first determining module 601, configured to determine that a first PUCCH and a first PUSCH at least partially overlap in time domain; and
a first transmission module 602, configured to multiplex first UCI carried by the first PUCCH on the first PUSCH for transmission, where
the first PUSCH is a PUSCH occupying a plurality of time units.

In this embodiment of this application, the apparatus further includes:
a second determining module, configured to determine a quantity of resources occupied by the first UCI in the first PUSCH according to a quantity of at least some resources of the first PUSCH.

In this embodiment of this application, the second determining module is further configured to: determining the quantity of resources occupied by the first UCI in the first PUSCH according to a configuration parameter and the quantity of at least some resources of the first PUSCH, where
the configuration parameter includes one or more of the following:
(1) a first parameter, used for determining the quantity of resources occupied by the first UCI; and
(2) a second parameter, used for determining a quantity of resources that may be used for multiplexing and transmitting the first UCI in the first PUSCH.

In this embodiment of this application, the apparatus further includes:
a third determining module, configured to determine one or more of the following according to a quantity of pieces of UCI that has been multiplexed /or a quantity of times that UCI has been multiplexed on the first PUSCH:
(1) whether to multiplex and transmit the first UCI on the first PUSCH;
(2) the quantity of resources occupied by the first UCI on the first PUCCH;
(3) a multiplexing manner of the first UCI on the first PUCCH.

In this embodiment of this application, the apparatus further includes:
a fourth determining module, configured to determine a quantity of times of the repetition transmission of the first UCI on the first PUSCH depending on whether the first PUCCH is a repetition transmission.

In this embodiment of this application, the quantity of at least some resources of the first PUSCH is determined according to one or more of the following:
(1) a quantity of symbols of the first PUSCH;
(2) a quantity of resources on the first PUSCH other than a DMRS;
(3) a quantity of resources configured by the network;
(4) a quantity of predefined resources;
(5) a quantity of resources occupied by the UCI that has been multiplexed and transmitted on the first PUSCH; and
(6) a type of the first UCI.

In this embodiment of this application, the quantity of resources configured by a network is less than or equal to a quantity of symbols of the first PUSCH, or the quantity of resources configured by the network is less than or equal to the quantity of resources on the first PUSCH other than the DMRS.

In this embodiment of this application, the apparatus further includes:
a first processing module, configured to, in a case that a quantity of times that the UCI has been multiplexed and transmitted on the first PUSCH is x, or in a case that a quantity of pieces of UCI that has been multiplexed and transmitted on the first PUSCH is y, after the first PUSCH is transmitted, in a case that a second PUCCH and the first PUSCH at least partially overlap in the time domain, perform one or more of the following:
skipping transmitting the second PUCCH;
determining whether to multiplex second UCI carried by the second PUCCH to the first PUSCH for transmission according to a priority of the second PUCCH;
determining whether the second UCI is multiplexed and transmitted on the first PUSCH according to a type of the second UCI carried by the second PUCCH; and
determining whether the second UCI carried by the second PUCCH is multiplexed and transmitted on the first PUSCH according to the resources occupied by the UCI that has been multiplexed and transmitted on the first PUSCH, where
x is less than or equal to a maximum quantity of times X that the UCI is capable of being multiplexed on the first PUSCH, and y is less than or equal to a maximum quantity Y of pieces of UCI that is capable of being multiplexed on the first PUSCH.

In this embodiment of this application, the apparatus further includes:
a fifth determining module, configured to determine resources occupied by the second UCI multiplexed and transmitted on the first PUSCH, where
the resources occupied by the second UCI do not include: resources occupied by the UCI multiplexed and transmitted on the first PUSCH.

In this embodiment of this application, the fifth determining module is further configured to: determine a quantity of resources occupied by the second UCI multiplexed and transmitted on the first PUSCH according to one or more of a first parameter, a second parameter, the quantity of times X that the first UCI is multiplexed on the first PUSCH, or the quantity Y of pieces of the first UCI that is multiplexed on the first PUSCH, where
the first parameter is used for determining the quantity of resources occupied by the first UCI; and the second parameter is used for determining a quantity of resources used for multiplexing and transmitting the first UCI on the first PUSCH;
   or,
determine the quantity of resources occupied by the second UCI multiplexed and transmitted on the first PUSCH according to a third parameter and/or a fourth parameter, where
the third parameter is used for determining a quantity of resources occupied by the second UCI, and the fourth parameter is used for determining a quantity of resources that can be used for multiplexing and transmitting the second UCI on the first PUSCH.

In this embodiment of this application, the apparatus further includes:
a sixth determining module, configured to determine a multiplexing manner of multiplexing the second UCI to the first PUSCH, where
the multiplexing manner includes one or more of the following:
   performing rate matching or puncturing on the second UCI on the first PUSCH; and
   the resources occupied by the second UCI multiplexed on the first PUSCH do not include resources occupied by the UCI multiplexed and transmitted on the first PUSCH.

In this embodiment of this application, the apparatus further includes:
a second transmission module, configured to multiplex and transmit the second UCI carried by the second PUCCH on continuous transmission resources in the first PUSCH in a case that the first PUSCH is a discontinuously transmitted PUSCH.

In this embodiment of this application, the apparatus further includes:
a seventh determining module, configured to determine the quantity of resources occupied by the second UCI on the first PUSCH according to a quantity of continuous transmission resources in the first PUSCH.

In this embodiment of this application, the apparatus further includes:
a second processing module, configured to perform one of the following:
skipping transmitting the first PUSCH; or
skipping transmitting some continuous transmission resources in the first PUSCH that overlaps with the second PUCCH in time or partially overlaps with the second PUCCH.

In this embodiment of this application, the apparatus further includes:
an eighth determining module, configured to determine a quantity of resources of the first PUCCH according to a quantity of times of repetition transmission of the first PUCCH in a case that the first PUCCH is a PUCCH of a repetition transmission.

In this embodiment of this application, the eighth determining module is further configured to: obtain the quantity of resources of the first PUCCH according to the quantity of times of repetition transmission of the first PUCCH, the first parameter and/or the second parameter.
the first parameter is used for determining the quantity of resources occupied by the first UCI; and the second parameter is used for determining a quantity of resources used for multiplexing and transmitting the first UCI on the first PUSCH.

In this embodiment of this application, the apparatus further includes:
a third processing module, configured to perform steps of multiplexing the first UCI carried by the first PUCCH on the first PUSCH for transmission in a case that the first PUCCH is a PUCCH of a repetition transmission and a first condition is met, where
the first condition includes one or more of the following:
   the quantity of resources of the first PUCCH is less than or equal to a quantity of at least some resources of the first PUSCH; or
   resources transmitted by the first PUCCH are within transmission duration of transmission of the first PUSCH.

In this embodiment of this application, the apparatus further includes:
a sending module, configured to report a terminal capability to a network side device, where
the terminal capability includes one or more of the following:
   (1) a maximum quantity of times of supporting multiplexing of UCI on a PUSCH;
   (2) a maximum quantity of pieces of UCI that can be multiplexed on PUSCH; and
   (3) whether to support UCI multiplexing in a manner of rate matching.

In this embodiment of this application, the apparatus further includes:
a fourth processing module, configured to perform an operation of multiplexing the first UCI carried by the first PUCCH on the first PUSCH for transmission in a case that duration of transmission of the first PUSCH is greater than a first threshold, or a quantity of resources occupied by the first PUSCH is greater than a second threshold.

In this embodiment of this application, the first UCI is the HARQ-ACK of the PDSCH, and a start moment of a PDCCH for scheduling the PDSCH is after a time T after the first PUSCH starts transmission, or after a time T before the first PUSCH starts transmission, and T is greater than or equal to 0.

In this embodiment of this application, a transmission mode of the first PUSCH is that a transport block is mapped on a plurality of time units for transmission; or a transport block is mapped on a plurality of time units for repeated transmission.

The apparatus provided in the embodiments of this application can implement each process implemented by the method embodiment shown in FIG. 2 and achieve the same technical effect. To avoid repetition, details are not repeated herein again.

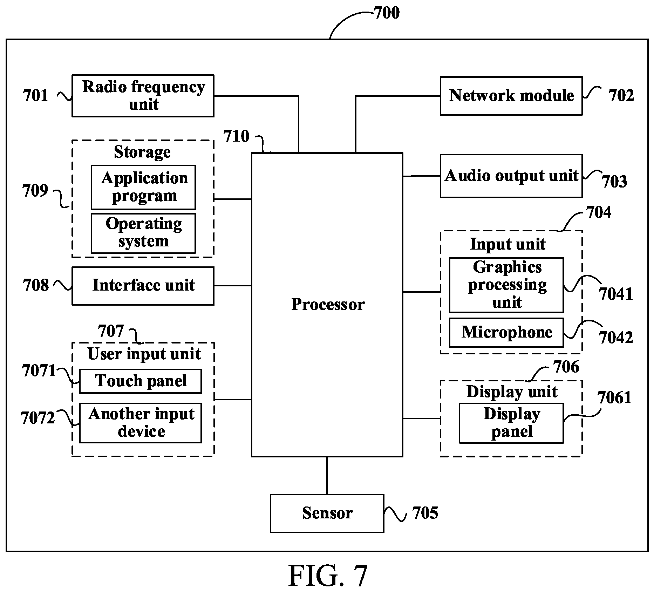

FIG. 7 is a schematic diagram of a hardware structure of a terminal implementing an embodiment of this application not covered by the claims. The terminal 700 includes but is not limited to: components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to the components. The power supply may be logically connected to the processor 710 by using a power management system, thereby implementing functions such as charging, discharging, and power consumption management by using the power management system. A terminal structure shown in FIG. 7 does not constitute a limitation to the terminal, and the terminal may include more or fewer components than those shown in the figure, or some components may be combined, or a different component deployment may be used, and details are not repeated herein again.

It should be understood that, in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061, and the display panel 7061 may be configured by using a liquid crystal display, an organic light-emitting diode, or the like. The user input unit 707 includes a touch panel 7071 and another input device 7072. The touch panel 7071 is also referred to as a touchscreen The touch panel 7071 may include two parts: a touch detection apparatus and a touch controller. The another input device 7072 may include, but not limited to, a physical keyboard, a functional key (such as a volume control key or a switch key), a track ball, a mouse, and a joystick, which are not described herein in detail again.

In this embodiment of this application, the radio frequency unit 701 receives downlink data from a network-side device and transmits the downlink data to the processor 710 for processing. In addition, the radio frequency unit sends uplink data to the network-side device. Generally, the radio frequency unit 701 includes, but is not limited to, an antenna, at least one amplifier, a transceiver, a coupler, a low noise amplifier, a duplexer, and the like.

The memory 709 is configured to store a software program or instructions and various data. The memory 709 may mainly include a program or instruction storage area and a data storage area. The program or instruction storage area may store an operating system, an application program or instruction required by at least one function (such as a sound playback function and an image display function), and the like. In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one magnetic disk storage device, a flash memory device, or another non-volatile solid-state storage device.

The processor 710 may include one or more processing units. Optionally, the processor 710 may integrate an application processor and a modem processor, where the application processor mainly processes an operating system, a user interface, an application program or instruction, and the like, and the modem processor mainly processes wireless communication, such as a baseband processor. It may be understood that the modem processor may not be integrated into the processor 710.

The terminal provided in this embodiment of this application can implement each process implemented by the method embodiment shown in FIG. 2 and achieve the same technical effect. To avoid repetition, details are not repeated herein again.

This embodiment of this application further provides a computer program product. The computer program product is stored in a non-volatile storage medium and executed by at least one processor to implement steps of the processing method shown in FIG. 2.

This embodiment of this application further provides a readable storage medium, storing a program or an instruction, where when executed by a processor, the program or the instruction implements the processes of the method embodiment shown in FIG. 2, and can achieve the same technical effect. To avoid repetition, details are not described herein again.

The processor is a processor in the terminal described in the foregoing embodiments. The readable storage medium includes a computer readable storage medium, such as a computer read-only memory (Read-Only Memory, ROM), a random access memory (Random Access Memory, RAM), a magnetic disk, an optical disk, and the like.

This embodiment of this application further provides a chip. The chip includes a processor and a communication interface, the communication interface is coupled to the processor, and the processor is configured to run a network-side device program or instructions to implement processes of the method embodiment shown in FIG. 2, and the same technical effect can be achieved. To avoid repetition, details are not repeated herein again.

It should be noted that, the chip mentioned in this embodiment of this application may also be referred to as a system-level chip, a system chip, a chip system, a system on chip, or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing descriptions of the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially or the part contributing to the existing technologies may be implemented in the form of a software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application have been described above with reference to the accompanying drawings.

## Claims

1. An uplink control information, UCI, multiplexing method, performed by a terminal, wherein the method comprises:
multiplexing (201), in a case that a first physical uplink control channel, PUCCH, and a first physical uplink shared channel, PUSCH, at least partially overlap in time domain, first UCI carried by the first PUCCH on the first PUSCH for transmission, wherein
the first PUSCH is a PUSCH occupying a plurality of time units, and the time unit comprises a slot;
**characterized in that**
the method further comprises:
determining, according to a quantity of at least some slots of the first PUSCH, a quantity of symbols occupied by the first UCI in the first PUSCH.

2. The method according to claim 1, wherein the determining, according to a quantity of at least some slots of the first PUSCH, a quantity of symbols occupied by the first UCI in the first PUSCH comprises:
determining, according to a configuration parameter and the quantity of at least some slots of the first PUSCH, the quantity of symbols occupied by the first UCI in the first PUSCH, wherein
the configuration parameter comprises one or more of the following:
a first parameter, used for determining the quantity of resources occupied by the first UCI; and
a second parameter, used for determining a quantity of resources used for multiplexing and transmitting the first UCI in the first PUSCH.

3. The method according to claim 2 or 3, wherein, the quantity of at least some slots of the first PUSCH is determined according to one or more of the following:
a quantity of resources configured by a network;
a quantity of symbols of the first PUSCH;
a quantity of resources other than a demodulation reference signal, DMRS, on the first PUSCH;
a quantity of predefined resources;
a quantity of resources occupied by UCI that has been multiplexed and transmitted on the first PUSCH; and
a type of the first UCI.

4. The method according to claim 3, wherein the quantity of slots configured by the network is less than or equal to the quantity of symbols of the first PUSCH, or the quantity of slots configured by the network is less than or equal to the quantity of resources other than the DMRS on the first PUSCH.

5. The method according to claim 1, further comprising:
determining one or more of the following according to a quantity of pieces of UCI that has been multiplexed and transmitted and/or a quantity of times that the UCI has been multiplexed and transmitted on the first PUSCH:
whether to multiplex and transmit the first UCI on the first PUSCH;
a quantity of resources occupied by the first UCI on the first PUCCH; and
a multiplexing manner of the first UCI on the first PUCCH.

6. The method according to claim 1, further comprising:
determining, depending on whether the first PUCCH is a repetition transmission, a quantity of times of the repetition transmission of the first UCI on the first PUSCH.

7. The method according to claim 1, in a case that a quantity of times that UCI has been multiplexed and transmitted on the first PUSCH is x, or in a case that a quantity of pieces of UCI that has been multiplexed and transmitted on the first PUSCH is y, after the first PUSCH is transmitted, in a case that a second PUCCH and the first PUSCH at least partially overlap in time domain, the method further comprises one or more of the following:
skipping transmitting the second PUCCH;
determining, according to a priority of the second PUCCH, whether to multiplex second UCI carried by the second PUCCH to the first PUSCH for transmission;
determining, according to a type of the second UCI carried by the second PUCCH, whether the second UCI is multiplexed and transmitted on the first PUSCH; and
determining, according to a resource occupied by the UCI that has been multiplexed and transmitted on the first PUSCH, whether the second UCI carried by the second PUCCH is multiplexed and transmitted on the first PUSCH, wherein
x is less than or equal to a maximum quantity of times X that the UCI is capable of being multiplexed on the first PUSCH, and y is less than or equal to a maximum quantity Y of pieces of UCI that is capable of being multiplexed on the first PUSCH.

8. The method according to claim 7, wherein in a case that it is determined that the second UCI is multiplexed and transmitted on the first PUSCH, the method further comprises:
determining resources occupied by the second UCI multiplexed and transmitted on the first PUSCH.

9. The method according to claim 7, wherein the determining resources occupied by the second UCI multiplexed and transmitted on the first PUSCH comprises:
determining, according to one or more of a first parameter, a second parameter, a quantity of times X that the first UCI is multiplexed on the first PUSCH, and a quantity Y of pieces of the first UCI that is multiplexed on the first PUSCH, a quantity of resources occupied by the second UCI multiplexed and transmitted on the first PUSCH, wherein
the first parameter is used for determining a quantity of resources occupied by the first UCI; and the second parameter is used for determining a quantity of resources used for multiplexing and transmitting the first UCI on the first PUSCH;
or,
determining, according to a third parameter and/or a fourth parameter, a quantity of resources occupied by the second UCI multiplexed and transmitted on the first PUSCH, wherein
the third parameter is used for determining a quantity of resources occupied by the second UCI, and the fourth parameter is used for determining a quantity of resources used for multiplexing and transmitting the second UCI on the first PUSCH.

10. The method according to claim 7, wherein in a case that it is determined that the second UCI is multiplexed and transmitted on the first PUSCH, the method further comprises:
determining a multiplexing manner of multiplexing the second UCI to the first PUSCH, wherein
the multiplexing manner comprises one or more of the following:
performing rate matching or puncturing on the second UCI on the first PUSCH, wherein
resources occupied by the second UCI on the first PUSCH do not comprise resources occupied by the UCI multiplexed and transmitted on the first PUSCH.

11. The method according to claim 7, further comprising:
multiplexing and transmitting, in a case that the first PUSCH is a discontinuously transmitted PUSCH, the second UCI carried by the second PUCCH on continuous transmission resources in the first PUSCH; and
determining, according to a quantity of continuous transmission resources in the first PUSCH, a quantity of resources occupied by the second UCI on the first PUSCH.

12. An uplink control information, UCI, multiplexing apparatus, comprising:
a first determining module (601), configured to determine that a first physical uplink control channel, PUCCH, and a first physical uplink shared channel, PUSCH, at least partially overlap in time domain; and
a first transmission module (602), configured to multiplex first UCI carried by the first PUCCH on the first PUSCH for transmission, wherein
the first PUSCH is a PUSCH occupying a plurality of time units, and the time unit comprises a slot;
**characterized in that** the apparatus further comprises:
a second determining module, configured to determine a quantity of symbols occupied by the first UCI in the first PUSCH according to a quantity of at least some slots of the first PUSCH.

13. A readable storage medium, storing a program or instructions which, when executed by a processor of a terminal, cause the terminal to perform the method according to any one of claims 1 to 10 .

## Patentansprüche

1. Verfahren zum Multiplexen von Uplink-Steuerinformationen, UCI, durchgeführt durch ein Endgerät, wobei das Verfahren umfasst:
Multiplexen (201), in einem Fall, dass ein erster physikalischer Uplink-Steuerkanal, PUCCH, und ein erster physikalischer Uplink-Gemeinschaftskanal, PUSCH, zumindest teilweise im Zeitbereich überlappen, erster UCI, die durch den ersten PUCCH getragen wird, auf den ersten PUSCH zur Übertragung,
wobei
der erste PUSCH ein PUSCH ist, der mehrere Zeiteinheiten belegt, und die Zeiteinheit einen Slot umfasst;
**dadurch gekennzeichnet, dass**
das Verfahren ferner umfasst:
Bestimmen, gemäß einer Anzahl von zumindest einigen Slots des ersten PUSCH, einer Anzahl von Symbolen, die durch die erste UCI in dem ersten PUSCH belegt werden.

2. Verfahren nach Anspruch 1, wobei das Bestimmen, gemäß einer Anzahl von zumindest einigen Slots des ersten PUSCH, einer Anzahl von Symbolen, die durch die erste UCI in dem ersten PUSCH belegt werden, umfasst:
Bestimmen, gemäß einem Konfigurationsparameter und der Anzahl von zumindest einigen Slots des ersten PUSCH, der Anzahl von Symbolen, die durch die erste UCI in dem ersten PUSCH belegt werden, wobei
der Konfigurationsparameter eines oder mehrere der Folgenden umfasst:
einen ersten Parameter, der zum Bestimmen der Anzahl von Ressourcen verwendet wird, die durch die erste UCI belegt werden; und
einen zweiten Parameter, der zum Bestimmen einer Anzahl von Ressourcen verwendet wird, die zum Multiplexen und Übertragen der ersten UCI in dem ersten PUSCH verwendet werden.

3. Verfahren nach Anspruch 2 oder 3, wobei die Anzahl von zumindest einigen Slots des ersten PUSCH gemäß einem oder mehreren der Folgenden bestimmt wird:
einer Anzahl von durch ein Netzwerk konfigurierten Ressourcen;
einer Anzahl von Symbolen des ersten PUSCH;
einer Anzahl von Ressourcen außer einem Demodulationsreferenzsignal, DMRS, auf dem ersten PUSCH;
einer Anzahl von vordefinierten Ressourcen;
einer Anzahl von Ressourcen, die durch UCI belegt werden, die multiplexiert worden ist und auf dem ersten PUSCH übertragen wird;
und eines Typs der ersten UCI.

4. Das Verfahren nach Anspruch 3, wobei die Anzahl von durch das Netzwerk konfigurierten Slots kleiner oder gleich der Anzahl von Symbolen des ersten PUSCH ist, oder die Anzahl von durch das Netzwerk konfigurierten Slots kleiner oder gleich der Anzahl von Ressourcen außer den DMRS auf dem ersten PUSCH ist.

5. Das Verfahren nach Anspruch 1, ferner umfassend:
Bestimmen eines oder mehrerer der Folgenden gemäß einer Anzahl von UCI-Teilen, die multiplexiert und übertragen worden sind, und/oder einer Anzahl von Malen, die die UCI auf dem ersten PUSCH multiplexiert und übertragen worden ist:
ob die erste UCI auf dem ersten PUSCH multiplexiert und übertragen werden soll;
eine Anzahl von durch die erste UCI auf dem ersten PUCCH belegten Ressourcen; und
eine Multiplexierungsweise der ersten UCI auf dem ersten PUCCH.

6. Das Verfahren nach Anspruch 1, ferner umfassend:
Bestimmen, abhängig davon, ob der erste PUCCH eine Wiederholungsübertragung ist, einer Anzahl von Malen der Wiederholungsübertragung der ersten UCI auf dem ersten PUSCH.

7. Das Verfahren nach Anspruch 1, in einem Fall, dass eine Anzahl von Malen, die UCI auf dem ersten PUSCH multiplexiert und übertragen worden ist, x ist, oder in einem Fall, dass eine Anzahl von UCI-Teilen, die auf dem ersten PUSCH multiplexiert und übertragen worden sind, y ist, nachdem der erste PUSCH übertragen worden ist, in einem Fall, dass ein zweiter PUCCH und der erste PUSCH sich zumindest teilweise im Zeitbereich überlappen, das Verfahren ferner eines oder mehrere der Folgenden umfasst:
Auslassen des Übertragens des zweiten PUCCH;
Bestimmen, gemäß einer Priorität des zweiten PUCCH, ob zweite durch den zweiten PUCCH getragene UCI zur Übertragung auf den ersten PUSCH multiplexiert werden soll;
Bestimmen, gemäß einem Typ der durch den zweiten PUCCH getragenen zweiten UCI, ob die zweite UCI auf dem ersten PUSCH multiplexiert und übertragen wird; und
Bestimmen, gemäß einer durch die UCI belegten Ressource, die auf dem ersten PUSCH multiplexiert und übertragen worden ist, ob die durch den zweiten PUCCH getragene zweite UCI auf dem ersten PUSCH multiplexiert und übertragen wird, wobei
x kleiner oder gleich einer maximalen Anzahl von Malen X ist, die die UCI in der Lage ist auf dem ersten PUSCH multiplexiert zu werden, und y kleiner oder gleich einer maximalen Anzahl Y von UCI-Teilen ist, die auf dem ersten PUSCH multiplexiert werden können.

8. Das Verfahren nach Anspruch 7, wobei in einem Fall, in dem festgestellt wird, dass die zweite UCI auf dem ersten PUSCH multiplexiert und übertragen wird, das Verfahren ferner umfasst:
Bestimmen von Ressourcen, die durch die multiplexierte und übertragene zweite UCI auf dem ersten PUSCH belegt werden.

9. Das Verfahren nach Anspruch 7, wobei das Bestimmen von Ressourcen, die durch die auf dem ersten PUSCH multiplexierte und übertragene zweite UCI belegt werden, umfasst:
Bestimmen, gemäß einem oder mehreren eines ersten Parameters, eines zweiten Parameters, einer Anzahl von Malen X, die die erste UCI auf dem ersten PUSCH multiplexiert wird, und einer Anzahl Y von Teilen der ersten UCI, die auf dem ersten PUSCH multiplexiert wird, einer Anzahl von Ressourcen, die durch die auf dem ersten PUSCH multiplexierte und übertragene zweite UCI belegt werden, wobei
der erste Parameter zum Bestimmen einer Anzahl von Ressourcen verwendet wird, die durch die erste UCI belegt werden; und der zweite Parameter zum Bestimmen einer Anzahl von Ressourcen verwendet wird zum Multiplexen und Übertragen der ersten UCI auf dem ersten PUSCH;
oder,
Bestimmen, gemäß einem dritten Parameter und/oder einem vierten Parameter, einer Anzahl von Ressourcen, die durch die auf dem ersten PUSCH multiplexierte und übertragene zweite UCI belegt werden, wobei
der dritte Parameter zum Bestimmen einer Anzahl von Ressourcen verwendet wird, die durch die zweite UCI belegt werden, und der vierte Parameter zum Bestimmen einer Anzahl von Ressourcen verwendet wird zum Multiplexen und Übertragen der zweiten UCI auf dem ersten PUSCH.

10. Das Verfahren nach Anspruch 7, wobei in einem Fall, in dem festgestellt wird, dass die zweite UCI auf dem ersten PUSCH multiplexiert und übertragen wird, das Verfahren ferner umfasst:
Bestimmen einer Multiplexierungsweise zum Multiplexen der zweiten UCI auf den ersten PUSCH, wobei
die Multiplexierungsweise eines oder mehrere der folgenden umfasst:
Durchführen einer Ratenanpassung oder einer Punktierung an der zweiten UCI auf dem ersten PUSCH, wobei
durch die zweite UCI auf dem ersten PUSCH belegte Ressourcen keine Ressourcen umfassen, die durch die auf dem ersten PUSCH multiplexierte und übertragene UCI belegt werden.

11. Das Verfahren nach Anspruch 7, ferner umfassend:
Multiplexen und Übertragen, in einem Fall, in dem der erste PUSCH ein diskontinuierlich übertragener PUSCH ist, der durch den zweiten PUCCH getragenen zweiten UCI auf kontinuierlichen Übertragungsressourcen in dem ersten PUSCH; und
Bestimmen, gemäß einer Anzahl von kontinuierlichen Übertragungsressourcen in dem ersten PUSCH, einer Anzahl von Ressourcen, die durch die zweite UCI auf dem ersten PUSCH belegt sind.

12. Eine Uplink-Steuerinformations-, UCI-, Multiplexvorrichtung, umfassend:
ein erstes Bestimmungsmodul (601), konfiguriert zum Bestimmen, dass ein erster physikalischer Uplink-Steuerkanal, PUCCH, und ein erster physikalischer Uplink-Gemeinschaftskanal, PUSCH, zumindest teilweise im Zeitbereich überlappen; und
ein erstes Übertragungsmodul (602), konfiguriert zum Multiplexen einer ersten durch den ersten PUCCH übertragenen UCI auf den ersten PUSCH zur Übertragung, wobei
der erste PUSCH ein PUSCH ist, der eine Vielzahl von Zeiteinheiten belegt, und die Zeiteinheit einen Slot umfasst;
**dadurch gekennzeichnet, dass** die Vorrichtung ferner umfasst:
ein zweites Bestimmungsmodul, konfiguriert zum Bestimmen einer Anzahl von Symbolen, die durch die erste UCI in dem ersten PUSCH gemäß einer Anzahl von zumindest einigen Slots des ersten PUSCH belegt sind.

13. Ein lesbares Speichermedium, das ein Programm oder Anweisungen speichert, die, wenn sie ausgeführt werden durch einen Prozessor eines Endgeräts, das Endgerät dazu veranlassen, das Verfahren nach einem der Ansprüche 1 bis 10 auszuführen.

## Revendications

1. Procédé de multiplexage d'informations de commande de liaison montante, UCI, mis en œuvre par un terminal, dans lequel le procédé comprend :
le multiplexage (201), dans un cas où un premier canal physique de commande de liaison montante, PUCCH, et un premier canal physique partagé de liaison montante, PUSCH, se chevauchent au moins partiellement dans le domaine temporel, de premières UCI transportées par le premier PUCCH sur le premier PUSCH en vue d'une transmission,
dans lequel
le premier PUSCH est un PUSCH occupant une pluralité d'unités temporelles, et l'unité temporelle comprend un créneau ;
**caractérisé en ce que**
le procédé comprend en outre :
la détermination, selon un nombre d'au moins certains créneaux du premier PUSCH, d'un nombre de symboles occupés par les premières UCI dans le premier PUSCH.

2. Procédé selon la revendication 1, dans lequel la détermination, selon un nombre d'au moins certains créneaux du premier PUSCH, d'un nombre de symboles occupés par les premières UCI dans le premier PUSCH comprend :
la détermination, selon un paramètre de configuration et le nombre d'au moins certains créneaux du premier PUSCH, du nombre de symboles occupés par les premières UCI dans le premier PUSCH, dans lequel
le paramètre de configuration comprend un ou plusieurs parmi les suivants :
un premier paramètre, utilisé pour déterminer le nombre de ressources occupées par les premières UCI ; et
un second paramètre, utilisé pour déterminer un nombre de ressources utilisées pour multiplexer et transmettre les premières UCI dans le premier PUSCH.

3. Procédé selon la revendication 2 ou 3, dans lequel, le nombre d'au moins certains créneaux du premier PUSCH est déterminé selon un ou plusieurs parmi les suivants:
un nombre de ressources configurées par un réseau ;
un nombre de symboles du premier PUSCH ;
un nombre de ressources autres qu'un signal de référence de démodulation, DMRS, sur le premier PUSCH ;
un nombre de ressources prédéfinies ;
un nombre de ressources occupées par des UCI qui ont été multiplexées et transmises sur le premier PUSCH ; et
un type des premières UCI.

4. Le procédé selon la revendication 3, dans lequel le nombre de créneaux configurés par le réseau est inférieur ou égal au nombre de symboles du premier PUSCH, ou le nombre de créneaux configurés par le réseau est inférieur ou égal au nombre de ressources autres que les DMRS sur le premier PUSCH.

5. Le procédé selon la revendication 1, comprenant en outre :
la détermination d'un ou plusieurs des éléments suivants selon un nombre d'éléments d'UCI qui ont été multiplexés et transmis et/ou un nombre de fois que les UCI ont été multiplexées et transmises sur le premier PUSCH :
s'il convient de multiplexer et de transmettre les premières UCI sur le premier PUSCH ;
un nombre de ressources occupées par les premières UCI sur le premier PUCCH ; et
une manière de multiplexage des premières UCI sur le premier PUCCH.

6. Le procédé selon la revendication 1, comprenant en outre :
la détermination, selon que le premier PUCCH est une transmission par répétition, d'un nombre de fois de transmission par répétition des premières UCI sur le premier PUSCH.

7. Le procédé selon la revendication 1, dans un cas où un nombre de fois que des UCI ont été multiplexées et transmises sur le premier PUSCH est x, ou dans un cas où un nombre d'éléments d'UCI qui ont été multiplexés et transmis sur le premier PUSCH est y, après que le premier PUSCH est transmis, dans un cas où un deuxième PUCCH et le premier PUSCH se chevauchent au moins partiellement dans le domaine temporel, le procédé comprend en outre un ou plusieurs des éléments suivants :
l'omission de la transmission du deuxième PUCCH ;
la détermination, selon une priorité du deuxième PUCCH, s'il convient de multiplexer des deuxièmes UCI portées par le deuxième PUCCH sur le premier PUSCH pour transmission ;
la détermination, selon un type des deuxièmes UCI portées par le deuxième PUCCH, si les deuxièmes UCI sont multiplexées et transmises sur le premier PUSCH ; et
la détermination, selon une ressource occupée par les UCI qui ont été multiplexées et transmises sur le premier PUSCH, si les deuxièmes UCI portées par le deuxième PUCCH sont multiplexées et transmises sur le premier PUSCH, dans lequel x est inférieur ou égal à un nombre maximal de fois X que les UCI sont capables d'être multiplexées sur le premier PUSCH, et y est inférieur ou égal à une quantité maximale Y d'éléments d'UCI susceptible d'être multiplexée sur le premier PUSCH.

8. Le procédé selon la revendication 7, dans lequel, dans un cas où il est déterminé que la seconde UCI est multiplexée et transmise sur le premier PUSCH, le procédé comprend en outre :
la détermination de ressources occupées par la seconde UCI multiplexée et transmise sur le premier PUSCH.

9. Le procédé selon la revendication 7, dans lequel la détermination de ressources occupées par la seconde UCI multiplexée et transmise sur le premier PUSCH comprend :
la détermination, selon un ou plusieurs parmi un premier paramètre, un second paramètre, une quantité de fois X que la première UCI est multiplexée sur le premier PUSCH, et une quantité Y d'éléments de la première UCI qui est multiplexée sur le premier PUSCH, d'une quantité de ressources occupées par la seconde UCI multiplexée et transmise sur le premier PUSCH,
dans lequel
le premier paramètre est utilisé pour déterminer une quantité de ressources occupées par la première UCI ; et le second paramètre est utilisé pour déterminer une quantité de ressources utilisées pour multiplexer et transmettre la première UCI sur le premier PUSCH ;
ou,
la détermination, selon un troisième paramètre et/ou un quatrième paramètre, d'une quantité de ressources occupées par la seconde UCI multiplexée et transmise sur le premier PUSCH, dans lequel
le troisième paramètre est utilisé pour déterminer une quantité de ressources occupées par la seconde UCI, et le quatrième paramètre est utilisé pour déterminer une quantité de ressources utilisées pour multiplexer et transmettre la seconde UCI sur le premier PUSCH.

10. Le procédé selon la revendication 7, dans lequel, dans un cas où il est déterminé que la seconde UCI est multiplexée et transmise sur le premier PUSCH, le procédé comprend en outre :
la détermination d'un mode de multiplexage pour multiplexer la seconde UCI sur le premier PUSCH, dans lequel
le mode de multiplexage comprend un ou plusieurs parmi les suivants :
la réalisation d'une adaptation de débit ou d'une perforation sur la seconde UCI sur le premier PUSCH, dans lequel
les ressources occupées par la seconde UCI sur le premier PUSCH ne comprennent pas les ressources occupées par l'UCI multiplexée et transmise sur le premier PUSCH.

11. Le procédé selon la revendication 7, comprenant en outre :
le multiplexage et la transmission, dans un cas où le premier PUSCH est un PUSCH transmis de manière discontinue, de la seconde UCI portée par le second PUCCH sur des ressources de transmission continues dans le premier PUSCH ; et la détermination, selon une quantité de ressources de transmission continues dans le premier PUSCH, d'une quantité de ressources occupées par la seconde UCI sur le premier PUSCH.

12. Un appareil de multiplexage d'informations de commande de liaison montante, UCI, comprenant :
un premier module de détermination (601), configuré pour déterminer qu'un premier canal physique de commande de liaison montante, PUCCH, et un premier canal physique partagé de liaison montante, PUSCH, se chevauchent au moins partiellement dans le domaine temporel ; et
un premier module de transmission (602), configuré pour multiplexer une première UCI portée par le premier PUCCH sur le premier PUSCH pour transmission, dans lequel
le premier PUSCH est un PUSCH occupant une pluralité d'unités temporelles, et l'unité temporelle comprend un créneau ;
**caractérisé en ce que** l'appareil comprend en outre :
un second module de détermination, configuré pour déterminer une quantité de symboles occupés par la première UCI dans le premier PUSCH selon une quantité d'au moins certains créneaux du premier PUSCH.

13. Un support de stockage lisible, stockant un programme ou des instructions qui, lorsqu'ils sont exécutés par un processeur d'un terminal, amènent le terminal à exécuter le procédé selon l'une quelconque des revendications 1 à 10.
